(19) Europäisches Patentamt
European Patent Office
Office européen des brevets

(11) **EP 3 539 706 B1**

(12) **EUROPEAN PATENT SPECIFICATION**

(45) Date of publication and mention
of the grant of the patent:
**06.07.2022 Bulletin 2022/27**

(21) Application number: **19159196.5**

(22) Date of filing: **25.02.2019**

(51) International Patent Classification (IPC):
**B23K 9/09** *(2006.01)*    **B23K 9/095** *(2006.01)*
**B23K 9/10** *(2006.01)*    **B23K 9/167** *(2006.01)*

(52) Cooperative Patent Classification (CPC):
**B23K 9/09; B23K 9/0953; B23K 9/167**

(54) **NON-CONSUMABLE ELECTRODE PULSE ARC WELDING CONTROL METHOD**

STEUERUNGSVERFAHREN FÜR LICHTBOGENSCHWEISSEN MIT NICHTABSCHMELZENDER ELEKTRODE

PROCÉDÉ DE COMMANDE DE SOUDAGE À L'ARC À IMPULSION D'ÉLECTRODE NON CONSOMMABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.03.2018 JP 2018044835**

(43) Date of publication of application:
**18.09.2019 Bulletin 2019/38**

(73) Proprietor: **DAIHEN Corporation**
**Osaka-shi, Osaka 532-8512 (JP)**

(72) Inventor: **TAKADA, Kento**
**Osaka, 532-8512 (JP)**

(74) Representative: **Boult Wade Tennant LLP**
**Salisbury Square House**
**8 Salisbury Square**
**London EC4Y 8AP (GB)**

(56) References cited:
**WO-A1-2013/072742**    **JP-B2- 3 696 907**
**US-A- 4 192 987**    **US-A1- 2013 306 610**

## Description

FIELD

The present disclosure relates to a non-consumable electrode pulse arc welding control method for welding by conducting a welding current made up of a peak current during a peak period and a base current during a base period.

BACKGROUND

Non-consumable electrode arc welding includes direct current (DC) or alternating current (AC) TIG (Tungsten Inert Gas) welding and DC or AC plasma arc welding. Among these methods, use is often made of non-consumable electrode arc welding in which pulse arc welding is performed by conducting pulse current, i.e., a combination of a peak current during a peak period and a base current during a base period.

For instance, JP-A-2006-75890 discloses a consumable electrode pulse arc welding method in which the rise and fall of the peak current is controlled to follow desired values along curves.

In non-consumable electrode pulse arc welding, the setting range of the pulse frequency for repeating the peak period and the base period is about 0.5 to 500 Hz ($s^{-1}$). The inductance value of the conduction path of the welding current is the sum of the inductance value of a reactor provided inside the welding power source and the inductance value of the cable of the welding torch. Accordingly, when the cable of the welding torch becomes longer, the inductance value of the conduction path will increase.

The welding current changes at a slower speed as the inductance value of the conduction path increases. Additionally, when the pulse frequency reaches approximately 100 Hz or higher, the peak current and base current whose current amplitude is restrictively set can no longer be conducted. That is, when the inductance value of the conduction path increases and the pulse frequency becomes higher, the current amplitude decreases and the average welding current value also decreases. When the average welding current value decreases there is a problem in that the penetration depth changes and the bead appearance also changes, leading to deterioration in the welding quality. Other examples of control methods for non-consumable electrode pulse arc welding can be found in WO2013/072742 (which forms the basis for the preamble of the independent claim), JP 3 696907, US 4, 192987 and US 2013/306610.

SUMMARY

In view of the above, an object of the present disclosure is to provide a non-consumable electrode pulse arc welding control method that is able to substantially maintain a set average welding current value, even when the inductance value of the conduction path increases and the pulse frequency is high. Specifically, the present invention provides a non-consumable electrode pulse arc welding control method as set out in claim 1.

According to an aspect of the present disclosure, there is provided a non-consumable electrode pulse arc welding control method for welding by conducting a welding current comprising a combination of a peak current during a peak period and a base current during a base period. The method may comprise: setting a peak current setting signal Ipr, a base current setting signal Ibr, and a current slope factor G (G is a real number satisfying the equality 0 < G < 1.0); detecting the welding current and outputting a current detection signal Id; calculating, during the peak period, a first current setting signal based on a formula $(\text{Ipr-Id}) \times G + \text{Id}$ every control cycle and controlling the welding current based on the calculated first current setting signal; and calculating, during the base period, a second current setting signal based on a formula $(\text{Ibr-Id}) \times G + \text{Id}$ every control cycle and controlling the welding current based on the calculated second current setting signal.

The current slope factor G may be set in accordance with an inductance value of a conduction path of the welding current.

The current slope factor G may be set in accordance with a pulse frequency for defining repetition of the peak period and the base period.

According to the above configurations of the present disclosure, the preset average welding current value can be substantially maintained, even when the pulse frequency and the inductance value of the conduction path increase, which is advantageous to enabling high quality welding.

DRAWINGS

Fig. 1 is a block diagram of a welding power source for implementing a non-consumable electrode pulse arc welding control method according to a first embodiment of the present disclosure.

Fig. 2 is a waveform diagram of a welding current Iw in Fig. 1 showing the non-consumable electrode pulse arc welding control method according to the first embodiment.

EMBODIMENTS

Hereinafter, embodiments of the present disclosure will be described with reference to the accompanying drawings.

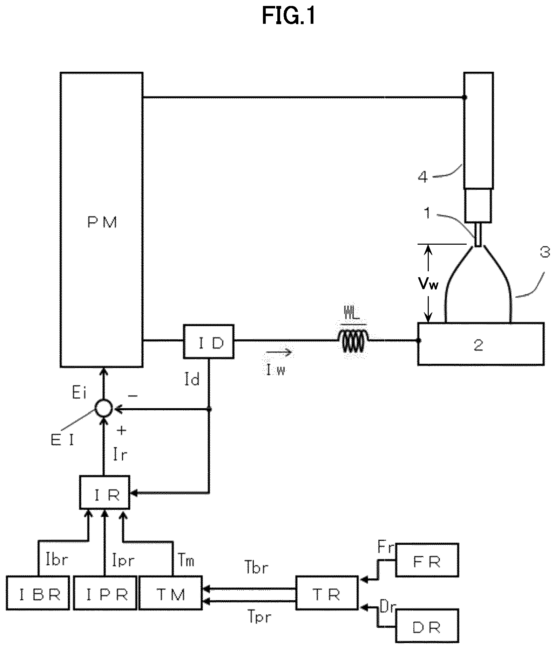

Fig. 1 is a block diagram illustrating a welding power source for implementing a non-consumable electrode pulse arc welding control method according to a first embodiment. Fig. 1 shows the case where the non-consumable electrode pulse arc welding is DC pulse TIG welding.

A power source main circuit PM, taking an input of e.g., a 3-phase 200 V from a commercial power source, performs power control by using e.g., inverter circuitry in accordance with a current error amplification signal Ei, and provides a welding current Iw and a welding voltage Vw. To this end, the power source main circuit PM may be provided with a primary rectifier circuit (for rectifying the output from the commercial power source), a capacitor (for smoothing the rectified direct current), inverter circuit (for converting the smoothed direct current into a high frequency alternating current based on the current error amplification signal Ei), a high frequency transformer (for stepping down the high frequency alternating voltage to a voltage suitable for arc welding), a secondary rectifier circuit (for rectifying the reduced high frequency alternating current), and a reactor (for smoothing the rectified current).

The welding current Iw is conducted through a welding torch 4, a welding electrode 1, an arc 3 and a base material (welding target) 2, and the welding voltage Vw is applied between the electrode 1 and the base material 2.

A peak current setting circuit IPR outputs a predetermined peak current setting signal Ipr. A base current setting circuit IBR outputs a predetermined base current setting signal Ibr. In the illustrated example, the value of the signal Ipr is greater than the value of the signal Ibr. In this disclosure, for simplicity, the value or quantity relevant to a 'signal X' may also be referred to as 'X'. Hence, the above-noted inequality may be denoted as 'Ipr > Ibr'.

A pulse frequency setting circuit FR outputs a predetermined pulse frequency setting signal Fr. The frequency to be set by this signal (denoted as 'Fr' in accordance with the above-noted notation) may be in a range of 0.5 to 500 Hz, or $0.5 < Fr < 500$ (Hz) . A duty setting circuit DR outputs a duty setting signal Dr. The duty, denoted as Dr, is represented as the percentage of the peak period in one cycle. In the illustrated example, Dr may be in a range of 30 to 70%, or $30 < Dr < 70$ (%), for example. A period setting circuit TR, receiving the above pulse frequency setting signal Fr and the above duty setting signal Dr as inputs, calculates a time length of the peak period and the base period based on both values, and outputs a peak period setting signal Tpr and a base period setting signal Tbr. Here, $Tpr = (1/Fr) \times (Dr/100)$ and $Tbr = (1/Fr)-Tpr$, where Tpr corresponds to the time length of the peak period, and Tbr corresponds to the time length of the base period.

A timer circuit TM, receiving the above peak period setting signal Tpr and the above base period setting signal Tbr as inputs, performs the following processing, and outputs a timer signal Tm. As noted below, a peak period Tp corresponds to when the timer signal Tm is at a High level, and a base period Tb corresponds to when the timer signal Tm is at a Low level.

(1) The timer signal Tm is outputted at a High level during the peak period Tp determined by the peak period setting signal Tpr.

(2) Subsequently, the timer signal Tm is outputted at a Low level (lower than the above-noted High level) during the base period Tb determined by the base period setting signal Tbr.

(3) The above operations of (1) and (2) are repeated.

A current detector circuit ID detects the above welding current Iw and outputs a current detection signal Id.

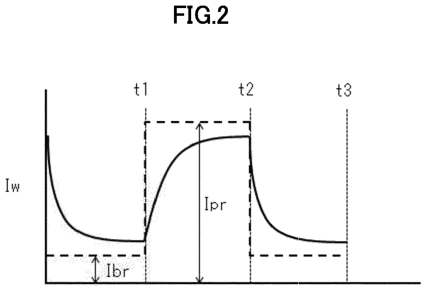

A current setting circuit IR, receiving the above peak current setting signal Ipr, the above base current setting signal Ibr, the above current detection signal Id and the above timer signal Tm as inputs, calculates a current setting signal $Ir = (Ipr-Id) \times G+Id$ every control cycle when the timer signal Tm is at a High level (peak period), while also calculating a current setting signal $Ir = (Ibr-Id) \times G+Id$ every control cycle when the timer signal Tm is at a Low level (base period), and outputs the current setting signal Ir. The above control cycle is set to a smaller value than the pulse cycle formed from the peak period and the base period. The control cycle is desirably set to 0.1 or less of the minimum value of the pulse cycle. Because the minimum value of the pulse cycle is 2 ms (maximum value of pulse frequency = 500 Hz), the control cycle is desirably set to 200 μs or less. For example, the control cycle may be set to 50 μs. Also, the above "G" is a current slope factor, and is set to a real number that is greater than 0 and smaller than 1.0 ($0 < G < 1.0$). The current slope factor G determines the rising speed to the peak current and the falling speed to the base current, and the current slope becomes gentler as G becomes smaller. A method for setting the current slope factor G to an appropriate value will be described later with reference to Fig. 2.

The current error amplification circuit EI amplifies the error between the above current setting signal Ir and the above current detection signal Id, and outputs the current error amplification signal Ei. Constant current control is performed as a result of the output control of the welding power source in accordance with the current error amplification signal Ei, and the welding current Iw made up of the peak current Ip and the base current Ib is conducted.

Fig. 2 is a waveform diagram of the welding current Iw in the welding power source described above in relation to Fig. 1. Fig. 2 is a waveform diagram in a steady state after a transition period has elapsed from arc start. Fig. 2 shows the case where the inductance value of the conduction path is comparatively high because of the pulse frequency being 100 Hz or more and the cable length of the welding torch being 10 m or more.

The period from time t1 to t2 is a peak period Tp which is determined by the peak period setting signal Tpr in Fig. 1. The period from time t2 to t3 is a base period Tb which is determined by the base period setting signal Tbr in Fig. 1. The period from time t1 to t3 is one pulse cycle (made up of two consecutive periods, i.e., a peak period and a base period, and vice versa), and the reciprocal thereof is the pulse frequency.

<Operations in peak period Tp from time t1 to t2>

The current setting signal Ir (output signal of the current setting circuit IR) 1 is calculated by the following equation every predetermined control cycle. G is a predetermined current slope factor, and Id is the current detection signal.

$$Ir = (Ipr-Id) \times G+Id$$

In Fig. 2, constant current control of the welding current Iw is performed with the above current setting signal Ir as the target value. As a result, a waveform is formed such that the welding current Iw rises, with the rate of change decreasing over time.

<Operations in base period Tb from time t2 to t3>

The current setting signal Ir is calculated by the following equation every control cycle.

$$Ir = (Ibr-Id) \times G+Id$$

In Fig. 2, constant current control of the welding current Iw is performed with the above current setting signal Ir as the target value. As a result, a waveform is formed such that the welding current Iw falls, with the rate of change decreasing over time.

The above current slope factor G determines the current slope at the rise and fall of the welding current Iw. The current slope factor G is set to a real number that is greater than 0 and smaller than 1 (0 < G < 1). The current slope becomes gentler as the current slope factor G becomes smaller. G is 1.0 for the conventional method.

The amplitude of the welding current Iw becomes smaller as the pulse frequency becomes higher and as the inductance value of the conduction path becomes larger. Accordingly, in the conventional method, the average value of the welding current Iw becomes smaller, thereby rendering welding quality to deteriorate. In accordance with the present embodiment, on the other hand, the average value of the welding current Iw substantially remains at the preset value even in the above-noted conditions, which is advantageous to providing good welding quality.

A numerical example of the change in average value of the welding current Iw is shown below. When the peak current setting signal Ipr is 300 A, the base current setting signal Ibr is 40 A, and duty is 50%, the set value of the average current value will be 170 A. Even with the conventional method, the average welding current value may be substantially 170 A in the case where the pulse frequency is less than 100 Hz and the cable length of the welding torch is 5 m or less. With the conventional method, however, the average welding current value decreases to about 140 A when the pulse frequency is 300 Hz and the welding torch cable length is 10 m. In accordance with the present embodiment, on the other hand, the average welding current value will be 165 A, meaning that the difference from the preset value can be significantly small. Furthermore, with the conventional method, the average welding current value will vary greatly as the pulse frequency or the welding torch cable length changes. With the present embodiment, the average welding current value remains substantially at the set value even when the pulse frequency or the welding torch cable length changes.

The current slope factor G may be experimentally set to an appropriate value, noting the following: when the current slope factor G is small, the average current value will vary slightly as the pulse frequency and the welding torch cable length change. When the current slope factor G is small, however, the transition period from arc start until the waveform of the welding current Iw converges to a steady state becomes longer, which renders the welding quality at this start stage to deteriorate. Hence, based on experiments, the current slope factor G is set so that the transition period at the time of arc start will be 100 ms or less and the difference between the average current value and the preset value will be in a permissible range. For instance, when the control cycle is 50 μs, G may be set to 0.05.

The transition period at arc start and the difference between the average current value and the preset value will change depending on the pulse frequency or the welding torch cable length (inductance of the conduction path). Accordingly, it may be desirable to change the current slope factor G in accordance with the pulse frequency or the inductance of the conduction path or both, whereby welding quality can further be improved.

The embodiment described above relates to the case where the non-consumable electrode pulse arc welding is DC pulse TIG welding, but the same or appropriately modified strategies can be applied to AC pulse TIG welding and DC/AC pulse plasma arc welding, for example.

**Claims**

1. A non-consumable electrode pulse arc welding control method for welding by conducting a welding current comprising a combination of a peak current during a peak period and a base current during a base period, **characterised by** the method comprising:

    setting a peak current setting signal Ipr, a base current setting signal Ibr, and a current slope factor G (G is a real number satisfying the equality 0 < G < 1.0);

Setting a pulse frequency setting signal Fr;

setting a duty setting signal Dr representing the percentage of the peak period in one pulse cycle;

setting a control cycle value to a smaller value than the pulse cycle formed from the peak period and the base period;

detecting the welding current and outputting a current detection signal Id;

calculating, during the peak period, a first current setting signal based on a formula (Ipr-Id)×G+Id every control cycle and controlling the welding current based on the calculated first current setting signal; and

calculating, during the base period, a second current setting signal based on a formula (Ibr-Id)×G+Id every control cycle and controlling the welding current based on the calculated second current setting signal,

wherein the current slope factor G is set in accordance with an inductance value of a conduction path of the welding current, and/or

the current slope factor G is set in accordance with a pulse frequency for defining repetition of the peak period and the base period.

## Patentansprüche

1. Steuerungsverfahren für Impulslichtbogenschweißen mit nicht-abschmelzender Elektrode zum Schweißen durch Leiten eines Schweißstroms, der eine Kombination aus einem Spitzenstrom während einer Spitzenperiode und einem Basisstrom während einer Basisperiode umfasst, **dadurch gekennzeichnet, dass** das Verfahren umfasst:

Einstellen eines Spitzenstrom-Einstellsignals Ipr, eines Basisstrom-Einstellsignals Ibr und eines Stromsteigungsfaktors G (G ist eine reelle Zahl, die die Gleichheit 0 < G < 1,0 erfüllt);

Einstellen eines Impulsfrequenz-Einstellsignals Fr;

Einstellen eines Tastverhältnis-Einstellsignals Dr, das den Prozentsatz der Spitzenperiode in einem Impulszyklus darstellt;

Einstellen eines Steuerzykluswertes auf einen kleineren Wert als der aus der Spitzenperiode und der Basisperiode gebildete Impulszyklus;

Erfassen des Schweißstroms und Ausgeben eines Stromerfassungssignals Id;

Berechnen, während der Spitzenperiode, eines ersten Stromeinstellsignals auf der Grundlage einer Formel (Ipr-Id)×G+Id in jedem Steuerzyklus und Steuern des Schweißstroms auf der Grundlage des berechneten ersten Stromeinstellsignals; und

Berechnen, während der Basisperiode, eines zweiten Stromeinstellsignals auf der Grundlage einer Formel (Ibr-Id)×G+Id in jedem Steuerzyklus und Steuern des Schweißstroms auf der Grundlage des berechneten zweiten Stromeinstellsignals,

wobei der Stromsteigungsfaktor G in Übereinstimmung mit einem Induktivitätswert eines Leitungspfades des Schweißstroms eingestellt wird, und/oder

der Stromsteigungsfaktor G in Übereinstimmung mit einer Impulsfrequenz eingestellt wird, um die Wiederholung der Spitzenperiode und der Basisperiode zu definieren.

## Revendications

1. Procédé de commande de soudage à arc pulsé avec électrode réfractaire pour un soudage par conduction d'un courant de soudage comprenant une combinaison d'un courant de crête durant une période de crête et d'un courant de base durant une période de base, **caractérisé en ce que** le procédé comprend :

le réglage d'un signal de réglage de courant de crête Ipr, d'un signal de réglage de courant de base Ibr et d'un facteur de pente de courant G (G est un nombre réel satisfaisant à l'égalité 0 < G < 1,0) ;

le réglage d'un signal de réglage de fréquence d'impulsions Fr ;

le réglage d'un signal de réglage de service Dr représentant le pourcentage de la période de crête dans un cycle d'impulsion ;

le réglage d'une valeur de cycle de commande sur une valeur plus petite que le cycle d'impulsion formé à partir de la période de crête et de la période de base ;

la détection du courant de soudage et la sortie d'un signal de détection de courant Id ;

le calcul, durant la période de crête, d'un premier signal de réglage de courant sur la base d'une formule (Ipr - Id) × G + Id à chaque cycle de commande et la commande du courant de soudage sur la base du premier signal de réglage de courant calculé ; et

le calcul, durant la période de base, d'un second signal de réglage de courant sur la base d'une formule (Ibr - Id) × G + Id à chaque cycle de commande et la commande du courant de soudage sur la base du second signal de réglage de courant calculé,

dans lequel le facteur de pente de courant G est réglé conformément à une valeur d'inductance d'une trajectoire de conduction du courant de soudage, et/ou

**EP 3 539 706 B1**

le facteur de pente de courant G est réglé conformément à une fréquence d'impulsions pour définir une répétition de la période de crête et de la période de base.

# FIG.1

FIG.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006075890 A
- WO 2013072742 A
- JP 3696907 A
- US 4192987 A
- US 2013306610 A